(19) Europäisches Patentamt
European Patent Office
Office européen des brevets

(11) **EP 1 380 328 B1**

(12) **EUROPEAN PATENT SPECIFICATION**

(45) Date of publication and mention
of the grant of the patent:
**18.04.2007   Bulletin 2007/16**

(51) Int Cl.:
***B01D 3/00*** *(2006.01)*       ***B01D 3/04*** *(2006.01)*

(21) Application number: **03014973.6**

(22) Date of filing: **01.07.2003**

(54) **Heat integrated distillation column**

Wärmeintegrierte Destillationskolonne

Colonne de distillation avec couplage de chaleur

(84) Designated Contracting States:
**DE**

(30) Priority:  **01.07.2002   JP 2002191966**

(43) Date of publication of application:
**14.01.2004   Bulletin 2004/03**

(73) Proprietors:
• **Kimura Chemical Plants Co., Ltd.**
**Hyogo, 660-8567 (JP)**
• **National Institute of Advanced Industrial Science**
**and Technology**
**Tokyo 100-8921 (JP)**

(72) Inventors:
• **Aso, Kazumasa**
**2-chome,**
**Amagasaki-shi,**
**Hyogo, 660-8567 (JP)**

• **Nakanishi, Toshinari**
**2-chome,**
**Amagasaki-shi,**
**Hyogo, 660-8567 (JP)**
• **Nakaiwa, Masaru,**
**National Instit. of Advanced Ind.**
**1-Chome,**
**Tsukuba-shi,**
**Ibaraki, 305-8565 (JP)**
• **Takamatsu, Takeichirou**
**Kyoto, 606-0024 (JP)**

(74) Representative: **Sajda, Wolf E. et al**
**MEISSNER, BOLTE & PARTNER**
**Postfach 86 06 24**
**81633 München (DE)**

(56) References cited:
**EP-A- 0 726 085          US-A- 3 959 085**
**US-A- 4 681 661**

**Description**

Technical Field

The present invention relates to a heat integrated distillation column which is constituted so that a multitube is coupled to a body shell via tube plates at both ends, thereby isolating a tube interior of each of the multitubes from a tube exterior thereof within the body shell. Each tube interior and exterior is provided with inlets and outlets of gases and liquids. A difference is made in operating pressure between the tube interior and the tube exterior, so as to differentiate in operating temperature therebetween, and heat is transferred from a higher pressure side to a lower pressure side while using a wall of each of the multitubes as a heat transfer surface, thereby making the higher pressure side an enriching section and the lower pressure side a stripping section.

Background Art

A heat integrated distillation column is known as an apparatus which gives a process with superior energy-saving properties. It comprises a lower-pressure column and a higher-pressure column, between which heat exchange is performed so as to avoid the requirement of heat being supplied to, or removed from, the process. It has been academically recognized that this process provides the most promising method of energy saving from the viewpoint of promoting energy efficiency in a distillation process.

In addition, a heat integrated distillation column has been suggested in which a multitube is coupled to a body shell via tube plates at both ends, thereby isolating a tube interior of the multitube from a tube exterior thereof in an interior of the body shell. The tube interior and exterior are provided with inlets and outlets of gases and liquids. A difference is made in the operating pressure between the tube interior and the tube exterior, so as to change the operating temperature therebetween, and heat is transferred from a higher pressure side to a lower pressure side while using a wall of the multitube as a heat transfer surface, thereby providing the distillation column with the higher pressure side as an enriching section, and the lower pressure side as a stripping section (JP-A-8-66601).

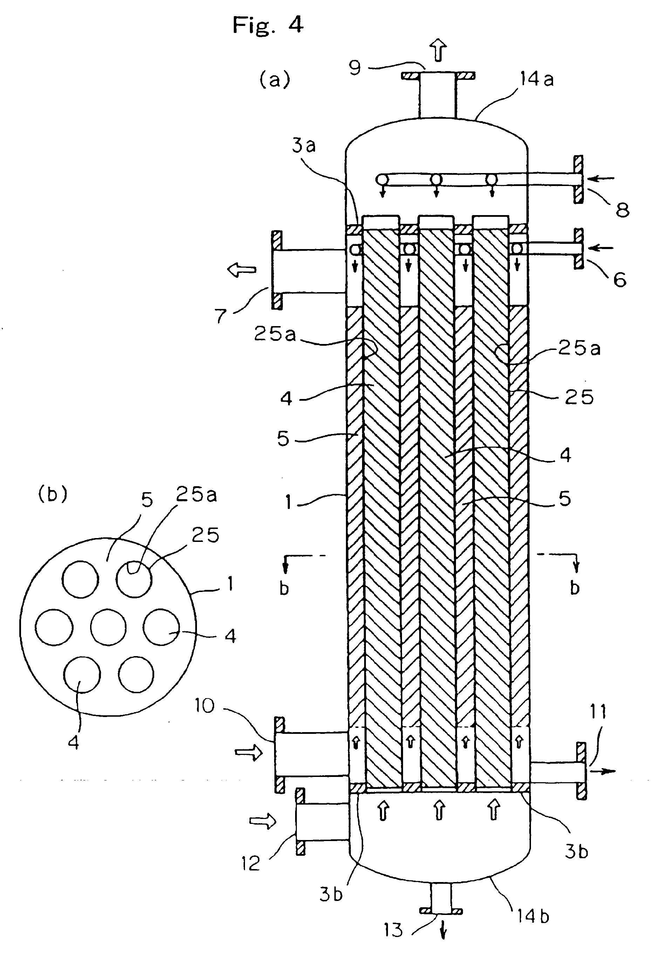

As shown in Figs. 4(a) and (b), this heat integrated distillation column comprises a body shell 1, and a multitube (tube) 25 which is inserted into the body shell 1 and coupled to the body shell 1 via tube plates at both ends (an upper tube plate (a column top tube plate) 3a and a lower tube plate (a column bottom tube plate) 3b), so that a tube interior 4 of the multitube 25 is isolated from a tube exterior 5 thereof, and the tube interior 4 serves as an enriching section at a higher pressure side, and the tube exterior 5 serves as a stripping section at a lower pressure side (alternatively, the tube interior 4 may serve as a stripping section at a lower pressure side, and the tube exterior 5 may serve as an enriching section at a higher pressure side).

In this heat integrated distillation column, the tube interior (the enriching section) 4 and the tube exterior (the stripping section) 5 are filled with packing. The upper portion of the body shell 1 is provided with a stripping-section liquid inlet 6 for supplying liquid to the tube exterior (the stripping section) 5 and a stripping-section vapor outlet 7 for extracting vapor from the tube exterior (the stripping section) 5. An end chamber 14a communicates with the tube interior (the enriching section) 4, and above the column top tube plate 3a it is provided with an enriching-section liquid inlet 8 for supplying liquid to the tube interior (the enriching section) 4 and an enriching-section vapor outlet 9 for extracting vapor from the tube interior (the enriching section) 4.

On the other hand, the lower portion of the body shell 1 is provided with a stripping-section vapor inlet 10 for supplying vapor to the tube exterior (the stripping section) 5 and a stripping-section liquid outlet 11 for extracting liquid from the tube exterior (the stripping section) 5. An end chamber 14b communicates with the tube interior (the enriching section) 4, and below the column bottom tube plate 3b it is provided with an enriching-section vapor inlet 12 for supplying vapor to the tube interior (the enriching section) 4 and an enriching-section liquid outlet 13 for extracting liquid from the tube interior (the enriching section) 4.

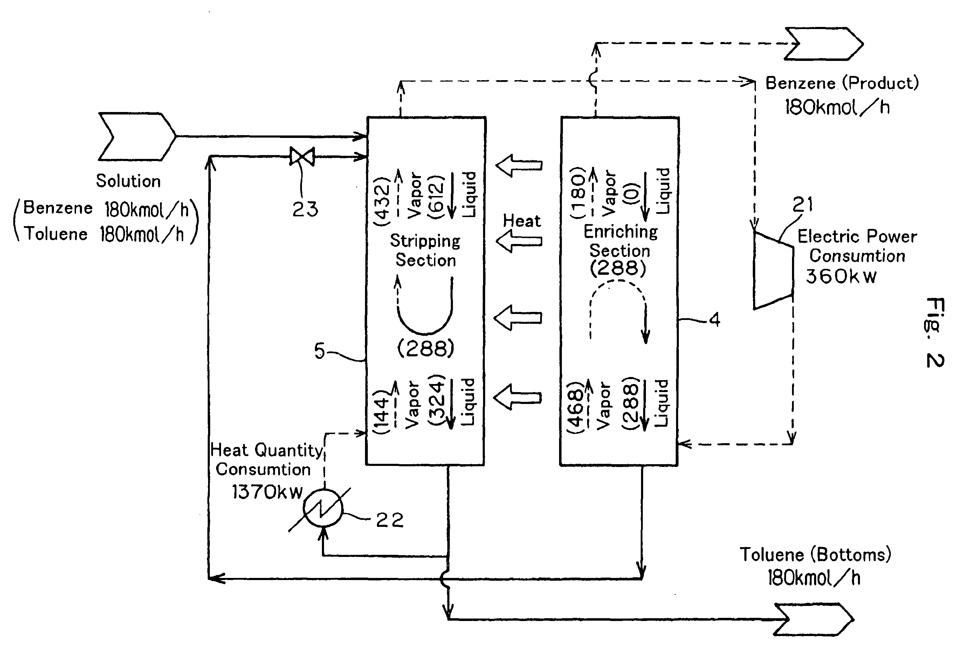

In such a heat integrated distillation column, as shown schematically in Fig. 2, a solution at a temperature of its boiling point, with consideration of the concentration thereof, is supplied to the column top of the stripping section 5 and column top vapor of the enriching section 4 is removed as a product.

Also, column top vapor from the stripping section 5 is supplied to the column bottom of the enriching section 4 of the higher pressure side, via a compressor 21. A part of the column bottom liquid of the stripping section 5, is discharged to the outside as "bottoms", while the rest thereof is returned to the column bottom of the stripping section 5 via a reboiler 22.

Further, a predetermined quantity of the column bottom liquid from the enriching section 4 is supplied to the stripping section 5 via a pressure reducing valve 23.

With regard to a heat integrated distillation column thus constituted, the lowest energy consumption is obtained when the quantity of vapor ascending to the top of the enriching section, is equivalent to the quantity thereof (the yield) which is removed from the column as the top product.

In this case the minimum quantity of vapor ascending from the column bottom of the enriching section is calculated from a theoretical minimum reflux ratio. This minimum quantity of vapor is recognized to be the minimum quantity of vapor which is processed by the compressor with regard to a heat integrated distillation column typically arranged as shown in Fig. 2.

While energy consumption of a general distillation column in which no heat exchange is performed, consists merely of the heat quantity which is consumed in the reboiler (energy consumption of a heating source such as a steamer), a heat integrated distillation column requires the energy for driving the compressor in addition to the heat quantity which is consumed in the reboiler. In general, electric power is used as the energy for driving the compressor, and in the case of converting electric power into heat (such as by using a steamer), three times the produced heat energy (kW) is required in electric power (kW) due to a low generating efficiency of, for example, a steamer.

Namely, the energy consumption (E) of a heat integrated distillation column is represented by the following formula.

$$E = (\text{heat quantity consumption (kW) in the reboiler}) + 3 \times (\text{electric power consumption (kW) in the compressor}).$$

Consequently, even if the quantity of vapor ascending from the column bottom of the enriching section is reduced to its minimum, the compressor has a high energy consumption, and this is a large percentage of the whole energy consumption of a heat integrated distillation column. It is, therefore, difficult to limit the energy consumption of the whole heat integrated distillation column.

The document EP 0 726 028, which is considered as the closest prior art, discloses an apparatus according to the preamble of claim 1, and a process for operating the same according to the preamble of claim 2.

The present invention is intended to solve the above-mentioned problem, and an object thereof is to provide a heat integrated distillation column in which a lower quantity of vapor is processed by the compressor, which brings about a reduction in energy consumption by the compressor, so as to decrease the whole energy consumption of a heat integrated distillation column.

Disclosure of Invention

A heat integrated distillation column, wherein a multitube is coupled to a body shell via tube sheets one positioned at each end, thereby isolating the tube interior of each tube in the multitube from the tube exterior.

The tube exterior is a region defined by the interior surface of the body shell, the outside surfaces of tubes forming the multitube and opposing sides of each of the tube sheets, and forms a first distillation part or stripping section in the column, and is further provided with a liquid inlet and a gas inlet, and a liquid outlet and a gas outlet.

Each of the tube interiors is in fluid contact with end chambers formed at each end of the tubes in the multitube, wherein the end chambers are defined by the interior surface of body shell and the opposite sides of the tube sheets from that defining the tube exterior region.

The tube interiors and the end chambers form a second distillation part or enriching section in the column, which is further provided with a liquid inlet and a gas inlet, and a liquid outlet and a gas outlet.

A compressor is provided between the gas outlet of the stripping section and the gas inlet of the enriching section, and provides a means for compressing gas flowing from the stripping section into the enriching section.

The walls of each of the tubes in the multitube provide a heat transfer surface between the regions of the tube interior and the tube exterior. A heater is provided at the solution input, the output of which feeds into a gas-liquid separator, wherein the gas-liquid separator has one output connected to the gas inlet of the enriching section, and one output connected via a pressure reducing valve to the liquid input of the stripping section. The gas-liquid separator being adapted to provide vapour from the solution to the enriching section and the remaining liquid from the solution to the stripping section.

Brief Description of the Drawings

Fig. 1     is a diagram showing schematically a heat integrated distillation column, including the details of gas and liquid, energy consumption and the like according to an embodiment of the present invention.

Fig. 2     is a diagram showing schematically a typical heat integrated distillation column related to the present invention including the details of gas and liquid, energy consumption and the like.

Fig. 3     is a diagram showing schematically a conventional distillation column in which no heat exchange is performed including the details of gas and liquid, energy consumption and the like.

Fig. 4     is a view showing a basic construction of a typical heat integrated distillation column related to the present invention; wherein Fig. 4(a) is a front cross sectional view, and Fig. 4(b) is a cross sectional view taken along a line b-b of Fig. 4(a).

Detailed Description of the Preferred Embodiments

An embodiment of the present invention is described and the characteristics thereof are detailed hereinafter.

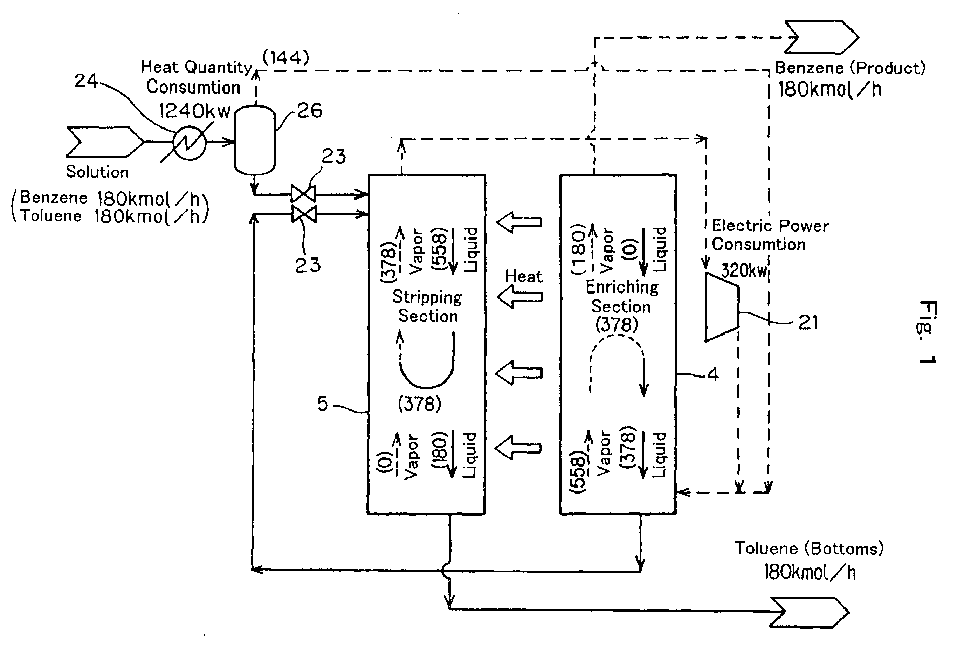

Fig. 1 is a diagram showing schematically a heat integrated distillation column according to an embodiment of the present invention, which includes the gas and liquid flow, energy consumption and the like. It should be noted that a basic construction of this heat integrated distillation column is similar to that of the heat integrated distillation column shown in Figs. 4(a) and 4(b), and described previously. Accordingly, a description of the basic construction is omitted, to avoid duplication. Instead, the characteristics of the present invention are described referring to Fig. 1.

A heat integrated distillation column according to this embodiment, is constructed so that heat is transferred from an enriching section 4 of a higher pressure side (such as a tube interior) to a stripping section 5 of a lower pressure side (such as a tube exterior). A solution which is at its boiling point as determined by the concentration thereof, is supplied to the column top of the stripping section 5 and column top vapor of the enriching section 4 is removed as a product.

The heat integrated distillation column is also constructed, so that column top vapor from the stripping section 5 is supplied to the column bottom of the enriching section 4 of the higher pressure side, via a compressor 21, and a part of the column bottom liquid from the stripping section 5 is discharged as bottoms.

The heat integrated distillation column according to this embodiment is provided with a heater (such as a steam heater) 24 for evaporating a part of a solution by heating, and is also constructed so that vapor evaporated from a part of the solution after heating with the heater 24 is supplied to the column bottom of the enriching section 4 after separating mist therefrom in a gas-liquid separator 26. The solution not evaporated is supplied to the column top of the stripping section 5 via a pressure reducing valve 23.

In the heat integrated distillation column according to this embodiment, as described above, since vapor, after compressing the vapor from the column top of the stripping section 5 by the compressor 21 is supplied to the column bottom of the enriching section 4, and vapor which is evaporated from a part of the solution by heating is supplied to the column bottom of the enriching section 4, the energy consumed (electric power consumption) by the compressor 21, is reduced by more than the energy (heat quantity consumption) required by the heater 24. This leads to an energy saving for the whole heat integrated distillation column.

Fig. 1 shows the quantity of gas and liquid ascending and descending in the enriching section 4 and the stripping section 5, as well as the energy consumed (electric power consumption) by the compressor 21 and the heater 24. This is for the case where a solution consisting of 180 kmol/h of benzene and 180 kmol/h of toluene (360 kmol/h in total) is supplied to the heat integrated distillation column according to the above-mentioned embodiment so as to recover 180 kmol/h of benzene as a product and 180 kmol/h of toluene as bottoms. In Fig. 1, it should be noted that values of the quantity of gas and liquid in parentheses, are expressed in a unit of kmol/h.

For comparison, Fig. 2 shows the quantity of gas and liquid ascending and descending in the enriching section 4 and the stripping section 5, as well as energy consumed (electric power consumption) in the compressor 21 and a reboiler 22, for a typical heat integrated distillation column as described in the Background Art. This is not provided with "a construction such that vapor evaporated from a part of a solution is supplied to the column bottom of an enriching section".

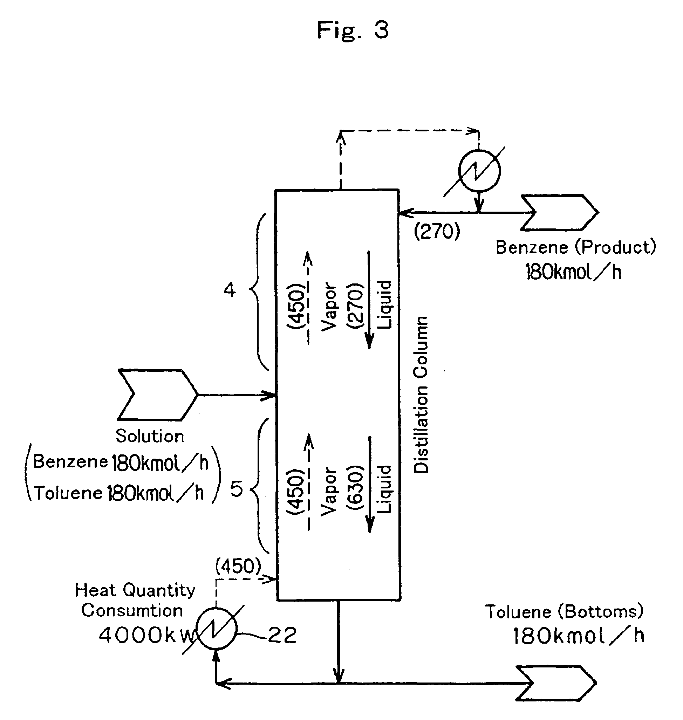

Also, Fig. 3 shows the quantity of gas and liquid ascending and descending in the enriching section 4 and the stripping section 5, as well as energy consumed (heat quantity consumption) in the reboiler 22, for a conventional distillation column, in which no heat exchange is performed.

As shown in Fig. 3, energy consumption (heat quantity consumption) of the reboiler is 4000 kW in the conventional distillation column, in which no heat exchange is performed.

Next, as shown in Fig. 2, energy consumption (heat quantity consumption) in the reboiler 22 is 1370 kW, and the electric power consumption in the compressor 21 is 360 kW. This is for the typical heat integrated distillation column, which is not provided with a construction whereby vapor evaporated from a part of a solution is supplied to the column bottom of an enriching section.

In this case, energy consumption (E) of a heat integrated distillation column is expressed by the following formula:

$$E = \text{(heat quantity consumption (kW) in the reboiler)} + 3 \times \text{(electric power consumption (kW) in the compressor)}$$

$$= 1370 \text{ kW} + 3 \times 360 \text{ kW}$$

$$= 2450 \text{ kW}.$$

It is thus understood that an energy saving of 38.7 % is achieved over the conventional distillation column, in which no heat exchange is performed (energy consumption is 4000 kW).

$$\{(4000 \text{ kW} - 2450 \text{ kW}) / 4000 \text{ kW}\} \times 100 = 38.7 \text{ %}.$$

Next, as shown in Fig. 1, energy consumption (heat quantity consumption) in the heater 24 is 1240 kW and the electric power consumption in the compressor 21 is 320 kW. This is for the heat integrated distillation column according to an embodiment of the present invention.

In this case, energy consumption (E) of a heat integrated distillation column is expressed by the following formula:

$$E = \text{(heat quantity consumption (kW) in the heater)} + 3 \times \text{(electric power consumption (kW) in the compressor)}$$

$$= 1240 \text{ kW} + 3 \times 320 \text{ kW}$$

$$= 2200 \text{ kW}.$$

It is thus understood that an energy saving of 45.0 % is achieved over the conventional distillation column in which no heat exchange is performed (energy consumption is 4000 kW).

$$\{(4000 \text{ kW} - 2200 \text{ kW}) / 4000 \text{ kW}\} \times 100 = 45.0 \text{ %}.$$

The employment of the heat integrated distillation column according to the present invention, provides the effect of improving the energy saving from 38.7 % to 45.0 %, when compared with the typical heat integrated distillation column, wherein the vapor evaporated from a part of the solution is not supplied to the column bottom of an enriching section.

In the heat integrated distillation column according to an embodiment of the present invention, since vapor evaporated from a part of the solution is supplied to an enriching section of a higher pressure side, the electric power consumption in a solution pump for supplying the solution is increased to a certain extent. The increase thereof, however, is negligible when compared with the whole energy consumption of the heat integrated distillation column.

The case of distilling a solution consisting of benzene and toluene is described as an example in the above-mentioned embodiment. It should be noted, however, that kinds of solutions are not particularly limited, and the present invention is generally applicable to the case of distilling a solution consisting of various components.

The case of using the tube exterior as the stripping section is described as an example in the above-mentioned embodiment. Alternatively, the present invention is applicable to a heat integrated distillation column, which is constructed so as to use the tube interior as the stripping section, and a similar effect to the above-mentioned embodiment can be obtained in that case.

The present invention is not limited to the above-mentioned embodiment in other points, and various applications and modifications can be made within the scope of the present invention, as described in the claims.

**Claims**

1. A system comprising heat integrated distillation column,

   - wherein a multitube (25) is coupled to a body shell (1) via tube sheets (3a, 3b) one positioned at each end, thereby isolating the tube interior (4) of each tube in the multitube (25) from the tube exterior (5);
   - wherein the tube exterior (5) is a region defined by the interior surface of the body shell (1), the outside surfaces of tubes forming the multitube (25) and opposing sides of each of the tube sheets (3a, 3b), and forms a first distillation part or stripping section in the column, and is further provided with a liquid inlet (6) and a gas inlet (10), and a liquid outlet (11) and a gas outlet (7);
   - each of the tube interiors (4) is in fluid contact with end chambers (14a, 14b) formed at each end of the tubes in the multitube (25), wherein the end chambers (14a, 14b) are defined by the interior surface of body shell (1) and the opposite sides of the tube sheets (3a, 3b) from that defining the tube exterior region (5),
   - wherein the tube interiors (4) and the end chambers (14a, 14b) form a second distillation part or enriching section in the column, which is further provided with a liquid inlet (8) and a gas inlet (12), and a liquid outlet (13) and a gas outlet (9);
   - a compressor (21) is provided between the gas outlet (10) of the stripping section and the gas inlet (8) of the enriching section, and provides a means for compressing gas flowing from the stripping section into the enriching section;
   - the walls of each of the tubes in the multitube (25) provide a heat transfer surface between the regions of the tube interior (4) and the tube exterior (5),

   **characterised in that**
   a heater (24) is provided at the solution input, the output of which feeds into a gas-liquid separator (26), wherein the gas-liquid separator (26) has one output connected to the gas inlet (12) of the enriching section, and one output connected via a pressure reducing valve (23) to the liquid input (6) of the stripping section, the gas-liquid separator being adapted to provide vapour from the solution to the enriching section and the remaining liquid from the solution to the stripping section.

2. A distillation process using the system as defined by claim 1, wherein, a solution to be distilled, is heated by the heater (24) to a temperature such that some of the solution evaporates, this solution is then passed through a gas-liquid separator (26) one output of which passes the boiling solution through a pressure reduction valve (23) to the fluid input (6) of the stripping section;

   - gas in the stripping section passes through the stripping section gas outlet (7) and travels through a compressor (21) which compresses the gas to give a higher pressure gas input to the enriching section via the enriching section gas input (12), liquid in the stripping section, passes through the stripping section liquid outlet (11) and is collected as the bottoms;
   - gas in the enriching section passes through the enriching section gas outlet (9) to be collected as the product, and liquid in the enriching section passes through the enriching section liquid outlet (13) and is input into the stripping section through the stripping section liquid input (6) via the pressure reduction valve (23); and

   wherein the walls of the tubes in the multitube (25) act as heat transfer surfaces and promote heat transfer from the higher pressure gas in the enriching section to pass to the liquid and gas in the stripping section;
   **characterised in that**
   gas in the gas-liquid separator (26) is input into the enriching section via the enriching section gas input (12), thereby increasing the temperature of the liquid and gas in the enriching section.

**Patentansprüche**

1. System mit einer Destillierkolonne mit thermisch integriertem Aufbau,
   wobei ein Vielfachrohr (25) mit einem Körpermantel (1) über Rohrplatten (3a, 3b) verbunden ist, von denen eines an jedem Ende angebracht ist, so daß der Rohrinnenraum (4) von jedem Rohr in dem Mehrfachrohr (25) von dem Rohraußenraum (5) getrennt ist;
   wobei der Rohraußenraum (5) ein Bereich ist, der von der Innenoberfläche des Körpermantels (1), den Außenoberflächen der Rohre, welche das Mehrfachrohr (25) bilden, und den gegenüberliegenden Seiten von jeder der Rohrplatten (3a, 3b) gebildet ist und einen ersten Destillierbereich oder Strippbereich in der Kolonne bildet und ferner mit einem Flüssigkeitseinlaß (6) und einem Gaseinlaß (10) sowie einem Flüssigkeitsauslaß (11) und einem Gasauslaß (7) versehen ist;

wobei jeder von den Rohrinnenräumen (4) mit Endkammern (14a, 14b) in Fluidkontakt steht, welche an jedem Ende der Rohre in dem Mehrfachrohr gebildet sind, wobei die Endkammern (14a, 14b) gebildet sind von der Innenoberfläche des Körpermantels (1) und den gegenüberliegenden Seiten der Rohrplatten (3a, 3b), welche den Rohraußenraum (5) bilden;

wobei die Rohrinnenräume (4) und die Endkammern (14a, 14b) einen zweiten Destillierbereich oder Anreicherungsbereich in der Kolonne bilden, der weiterhin mit einem Flüssigkeitseinlaß (8) und einem Gaseinlaß (12) sowie einem Flüssigkeitsauslaß (13) und einem Gasauslaß (9) versehen ist;

wobei ein Kompressor (21) zwischen dem Gasauslaß (10) des Abstreif- bzw. Strippbereiches und dem Gaseinlaß (8) des Anreicherungsbereiches vorgesehen ist und eine Einrichtung bildet, um Gas zu komprimieren, das von dem Abstreif- bzw. Strippbereich in den Anreicherungsbereich strömt;

wobei die Wände von jedem der Rohre in dem Mehrfachrohr (25) eine Wärmeübertragungsfläche zwischen den Bereichen des Rohrinnenraumes (4) und des Rohraußenraumes (5) bilden,

**dadurch gekennzeichnet,**

**daß** eine Heizung an dem Lösungseingang vorgesehen ist, dessen Ausgang eine Zuführung für einen Gas-Flüssigkeits-Separator (26) bildet, wobei der Gas-Flüssigkeits-Separator (26) einen Ausgang, der mit dem Gaseinlaß (12) des Anreicherungsbereiches verbunden ist, und einen Ausgang aufweist, der über ein Druckreduzierventil (23) mit dem Flüssigkeitseinlaß (6) des Abstreif- bzw. Strippbereiches verbunden ist, wobei der Gas-Flüssigkeits-Separator dazu ausgelegt ist, Dampf von der Lösung dem Anreicherungsbereich sowie die verbleibende Flüssigkeit von der Lösung dem Abstreif- bzw. Strippbereich zuzuführen.

**2.** Destillierprozess unter Verwendung des Systems nach Anspruch 1,

wobei eine zu destillierende Lösung von der Heizung (24) auf eine Temperatur aufgeheizt wird, so daß ein Teil der Lösung verdampft, diese Lösung dann durch einen Gas-Flüssigkeits-Separator (26) geleitet wird, von dem der eine Ausgang die siedende Lösung durch ein Druckreduzierventil (23) zu dem Fluideinlaß (6) des Abstreif- bzw. Strippbereiches leitet;

wobei Gas in dem Abstreif- bzw. Strippbereich durch den Abstreifbereich-Gasauslaß (7) strömt und durch einen Kompressor (21) hindurchgeht, der das Gas komprimiert, um für eine Gaszuführung mit höherem Druck zu dem Anreicherungsbereich über den Anreicherungsbereich-Gaseinlaß (12) zu sorgen, wobei Flüssigkeit in dem Abstreif- bzw. Strippbereich durch den Abstreifbereich-Flüssigkeitsauslaß (11) hindurchgeht und als Bodensatz gesammelt wird;

wobei Gas in dem Anreicherungsbereich durch den Anreicherungsbereich-Gasauslaß (9) hindurchgeht und als Produkt gesammelt wird, während Flüssigkeit in dem Anreicherungsbereich durch den Anreicherungsbereich-Flüssigkeitsauslaß (13) hindurchgeht und durch den Abstreifbereich-Flüssigkeitseinlaß (6) über das Druckreduzierventil (23) in den Anreicherungsbereich eingeleitet wird; und

wobei die Wände der Rohre in dem Mehrfachrohr (25) als Wärmeübertragungsflächen wirken und die Wärmeübertragung von dem Gas mit höherem Druck in dem Anreicherungsbereich unterstützen, um diese der Flüssigkeit und dem Gas in dem Abstreif- bzw. Strippbereich zuzuführen,

**dadurch gekennzeichnet,**

**daß** Gas in dem Gas-Flüssigkeits-Separator (26) in den Anreicherungsbereich über den Anreicherungsbereich-Gaseinlaß (12) eingeleitet wird, so daß auf diese Weise die Temperatur der Flüssigkeit und des Gases in dem Anreicherungsbereich erhöht wird.

## Revendications

**1.** Système comprenant une colonne de distillation avec intégration thermique,

- dans lequel un multi-tubes (25) est couplé à une coque de corps (1) via des plaques à tubes (3a, 3b) positionnées à chaque extrémité, isolant ainsi l'intérieur (4) de chaque tube dans le multi-tubes (25) vis-à-vis de l'extérieur (5) des tubes;

- dans lequel l'extérieur (5) des tubes est une région définie par la surface intérieure de la coque de corps (1), par les surfaces extérieures de tubes formant le multi-tubes (25), et par des côtés opposés de chacune des plaques à tubes (3a, 3b), et forme une première partie de distillation ou section de rectification dans la colonne, et est en outre pourvu d'une entrée à liquide (6) et d'une entrée à gaz (10), ainsi que d'une sortie à liquide (11) et d'une sortie à gaz (7) ;

- chaque intérieur (4) de tube est en contact fluidique avec des chambres terminales (14a, 14b) formées à chaque extrémité des tubes dans le multi-tubes (25), lesdites chambres terminales (14a, 14b) étant définies par la surface intérieure de la coque de corps (1) et par les côtés opposés des plaques à tubes (3a, 3b) par rapport à ceux qui définissent la région extérieure (5) des tubes,

- dans lequel l'intérieur (4) des tubes et les chambres terminales (14a, 14b) forment une seconde partie de distillation ou section d'enrichissement dans la colonne, et est en outre pourvu d'une entrée à liquide (8) et d'une entrée à gaz (12), ainsi que d'une sortie à liquide (13) et d'une sortie à gaz (9) ;

- un compresseur (21) est prévu entre la sortie à gaz (10) de la section de rectification et l'entrée à gaz (8) de la section d'enrichissement, et constitue un moyen pour comprimer le gaz qui s'écoule depuis la section de rectification vers la section d'enrichissement ;

- les parois de chacun des tubes dans le multi-tubes (25) constituent une surface de transfert thermique entre les régions intérieures (4) des tubes et extérieures (5) des tubes ;

**caractérisé en ce que** :

un dispositif chauffant (24) est prévu à l'entrée pour la solution, dont la sortie alimente un séparateur gaz-liquide (26), ledit séparateur gaz-liquide (26) ayant une sortie connectée à l'entrée à gaz (12) de la section d'enrichissement, et une sortie connectée via une valve de réduction de pression (23) à l'entrée à liquide (6) de la section de rectification, le séparateur de gaz-liquide étant adapté à fournir des vapeurs provenant de la solution vers la section d'enrichissement, et le liquide restant provenant de la solution vers la section de rectification.

2. Procédé de distillation utilisant le système tel que défini dans la revendication 1, dans lequel une solution à distiller est chauffée par le dispositif chauffant (24) à une température telle qu'une partie de la solution s'évapore, ladite solution est alors passée à travers un séparateur de gaz-liquide (26) dont une sortie fait passer la solution en ébullition à travers une valve de réduction de pression (23) vers l'entrée à fluide (6) de la section de rectification ;

- le gaz dans la section de rectification traverse la sortie à gaz (7) de la section de rectification et circule à travers un compresseur (21) qui comprime le gaz pour fournir un gaz de à haute pression à l'entrée vers la section d'enrichissement via l'entrée à gaz (12) de la section d'enrichissement, et le liquide dans la section de rectification traverse la sortie à liquide (11) de la section de rectification et est collectée au niveau du fond ;

-- le gaz dans la section d'enrichissement traverse la sortie à gaz (9) de la section d'enrichissement pour être collecté à titre de produit, et le liquide dans la section d'enrichissement traverse la sortie à liquide (13) de la section d'enrichissement et est injecté dans la section de rectification à travers l'entrée à liquide (6) de la section de rectification via la valve de réduction de pression (23) ; et

dans lequel les parois des tubes dans le multi-tubes (25) agissent à titre de surfaces de transfert thermique et favorisent un transfert thermique depuis le gaz à haute pression dans la section d'enrichissement pour passer vers le liquide et le gaz dans la section de rectification;

**caractérisé en ce que**

le gaz dans le séparateur de gaz-liquide (26) est injecté dans la section d'enrichissement via l'entrée à gaz (12) de la section d'enrichissement, augmentant ainsi la température du liquide et du gaz dans la section d'enrichissement.

Fig. 1

## Fig. 2

EP 1 380 328 B1

Fig. 3

Benzene (Product)
180kmol／h

(270)

Solution
(Benzene 180kmol／h)
(Toluene 180kmol／h) 5

4

Distillation Column

Vapor (270) Liquid

(450)

Vapor (630) Liquid

(450)

(450)

Heat Quantity
Consumtion
4000kw ～22

Toluene (Bottoms)
180kmol／h

11

Fig. 4

(a)

(b)